# EUROPEAN PATENT SPECIFICATION

(11) **EP 1 739 809 B1**
(45) Date of publication and mention of the grant of the patent: **18.05.2011**
(21) Application number: 06013402.0
(22) Date of filing: 28.06.2006
(51) Int. Cl.: H02K 3/50, H02K 5/22

(54) **A central power distributing member for a brushless motor, a brushless motor provided therewith and a method of assembling it**
Eine zentrale Energieverteilungsanordnung für einen bürstenlosen Motor, ein bürstenloser Motor damit und ein Verfahren zur Herstellung dafür
Une barre omnibus pour un moteur sans balais, un moteur sans balais comprenant ladite barre omnibus et procédé d' assemblage

(30) Priority: 29.06.2005 JP 2005189719
(43) Date of publication of application: 03.01.2007
(73) Proprietor: Sumitomo Wiring Systems, Ltd., Yokkaichi-city, Mie 510-8503 (JP); HONDA MOTOR CO., LTD., Tokyo 107-8556 (JP)
(72) Inventor: Uchiyama, Takahiro, Yokkaichi-city Mie 510-8503 (JP); Suzuki, Izumi, Yokkaichi-city Mie 510-8503 (JP); Inoue, Masashi, Minato-ku Tokyo 107-8556 (JP); Horie, Tatsuro, Minato-ku Tokyo 107-8556 (JP); Okamura, Akihiro, Minato-ku Tokyo 107-8556 (JP)
(74) Representative: Müller-Boré & Partner Patentanwälte

(56) References cited:
- WO-A-97/26700
- DE-A1- 10 318 816
- US-A1- 2004 066 103
- US-A1- 2004 070 293

## Description

The present invention relates to a central power distributing member for a brushless motor, preferably an automotive thin brushless motor, to a brushless motor provided therewith and to a method of assembling it.

In an automotive thin brushless motor in which a rotor is encircled by a ring-shaped stator, the stator is comprised of a plurality of magnetic poles made of coils and an annular central power distributing member for supplying power to the magnetic poles. One example of such a central power distributing member is disclosed in Japanese Unexamined Patent Publication No. 2003-134724. This member is constructed by concentrically tying a plurality of ring-shaped busbars by means of tying members. Each busbar is provided with a plurality of tabs to be connected with ends of the coils of the magnetic poles and a terminal to be connected with a wire of a battery-side circuit.

Since the busbars are circular in the above known central power distributing member, it is difficult to circumferentially position a plurality of busbars with high precision and intervals between the tabs and those between the terminals may be deviated.

US 2004/0070293 A1 discloses ring-like lead frames made by an insulated electric wire comprising a solid wire conductor covered with an insulating material, the lead frames corresponding to respective phases which are partially and integrally connected together by a molding process so as to provide molding resin or by a fixing member between the respective terminal portions of the lead frames.

US 2004/0066103 A1 discloses an interconnection assembly having phase parts for U phase. V phase and W phase. The phase parts are connected to each other by forming resin molds. Alternatively, clips having two parts are used instead of the resin mold.

WO 97/26700 discloses a motor mounted in a vehicle comprising a stator, the stator having projections inwardly extending from a ring section of the stator. The projections are for holding the coils.

DE 103 18 816 A1 discloses a stator having a connecting structure for stator coils in which at least a part of the connecting members is formed by a connecting holder produced from a string material by bending.

Thus, according to an aspect, it is a problem to provide a central power distribution member in which the busbars can be positioned with high precision in an easy manner.

This object is solved according to the invention by the features of the independent claims. Preferred embodiments of the invention are subject of the dependent claims.

According to the invention, there is provided a central power distributing member for a brushless motor for supplying power to coils of a stator, the central power distributing member comprising a plurality of tied substantially ring-shaped busbars each provided with at least one power supply terminal and tabs to be connected with the coils, wherein:
each busbar is formed by bending a wire material in which at least one single core wire is covered by an insulation coating and is formed with a plurality of straight portions circumferentially arranged at intervals,
each busbar comprises a plurality of straight-portion rows and is formed to substantially have a ring shape by connecting the plurality of straight portions at angles to each other,
wherein each of the straight-portion rows comprises three straight portions, and
the plurality of busbars are tied by one or more clips at a plurality of circumferentially spaced apart positions by connecting the straight portions arranged substantially in parallel.

Since the plurality of busbars are tied at the plurality of circumferentially spaced apart positions by connecting the straight portions arranged substantially in parallel, the busbars can be positioned with high precision without being circumferentially displaced from each other, thereby avoiding the deviation of intervals between the tabs and those between the terminals from correct ones.

Preferably, the busbars are made of a synthetic resin.

Since springback is very likely or unavoidable in the case where a long and narrow metal material is bent into an arc, it is difficult to finish the arc of a highly precise curvature. In this respect, the busbars can be bent with high precision since being comprised only of a plurality of straight portions.

Still further preferably, the tabs are formed by bending portions of the busbars to project in a folded state.

Since the tabs and the busbars are integral or unitary to each other, the number of parts can be reduced as compared to a case where tabs produced as parts separate from busbars are secured to the busbars.

Still further preferably, a pair of connecting end portions have the insulation coating at least partly removed to at least partly expose the at least one single-core wire, and the terminal can be electrically connected with the exposed sections of the single-core wire.

Further preferably, a filler is at least partly filled into a space adjacent to the connecting end portions such that the connecting end portions can be held insulated from each other

Most preferably, the busbars are substantially coaxially arranged while being spaced apart at the given intervals along an axial direction.

According to the invention, there is further provided a brushless motor particularly an automotive thin brushless motor, comprising a central power distributing member according to one of the claims for supplying power to coils of a stator.

According to the invention, there is further provided a method of assembling or mounting a central power distributing member for a brushless motor, in particular according to the invention or a preferred embodiment thereof, for supplying power to coils of a stator, the method comprising the following steps:
providing a plurality of substantially ring-shaped busbars each provided with at least one power supply terminal and tabs to be connected with the coils,
forming each busbar by bending a wire material in which at least one single core wire is covered by an insulation coating and provided with a plurality of straight portions circumferentially arranged at intervals,
forming each busbar to comprise a plurality of straight-portion rows and to substantially have a ring shape by connecting the plurality of straight portions at angles to each other, wherein each straight-portion
row comprises three straight portions, respectively, and
tying the plurality of busbars by one or more clips at a plurality of circumferentially spaced apart positions by connecting the straight portions arranged substantially in parallel.

Since the plurality of busbars are tied at the plurality of circumferentially spaced apart positions by connecting the straight portions arranged substantially in parallel, the busbars can be positioned with high precision without being circumferentially displaced from each other, thereby avoiding the deviation of intervals between the tabs and those between the terminals from correct ones.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a front view of one embodiment,
FIG. 2 is a front view of a busbar,
FIG. 3 is a partial enlarged front view showing a terminal,
FIG. 4 is a partial enlarged plan view showing the terminal,
FIG. 5 is a partial enlarged side view showing the terminal,
FIG. 6 is a partial enlarged section showing a tied portion of a clip and the busbars, and
FIG. 7 is a partial enlarged front view of a tab.

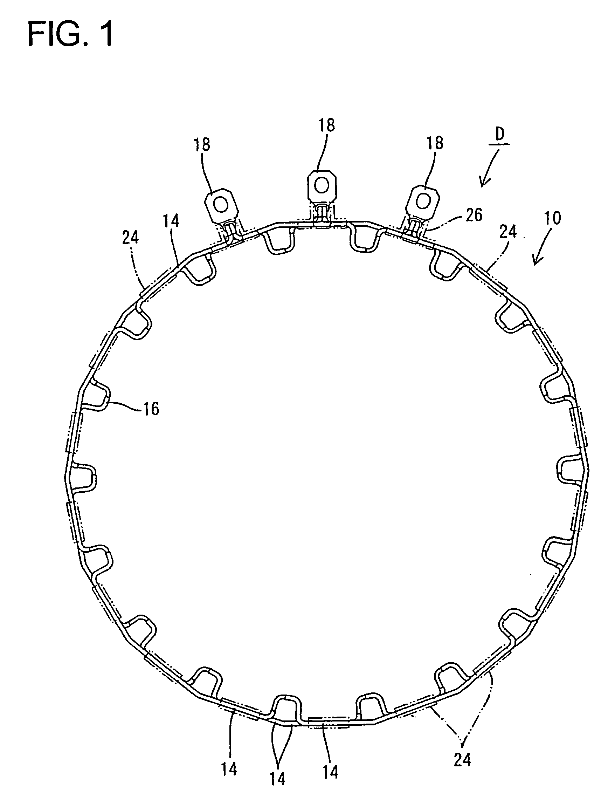

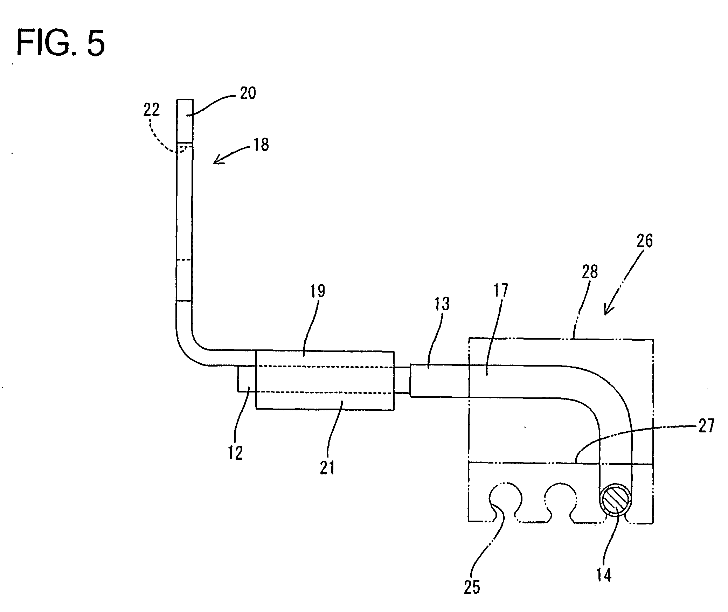

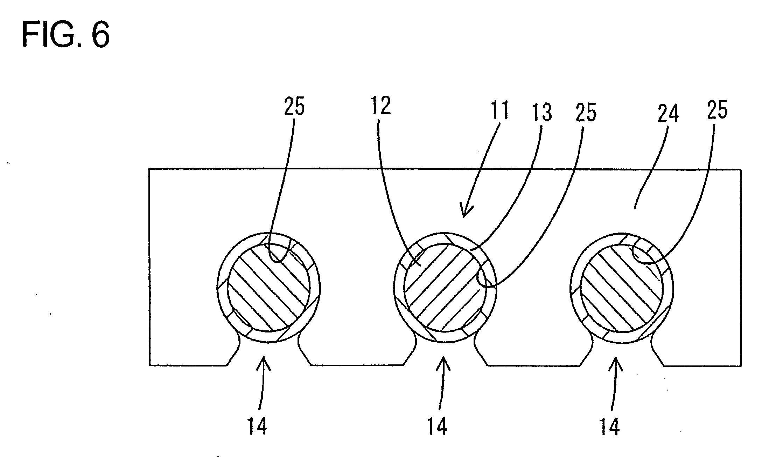

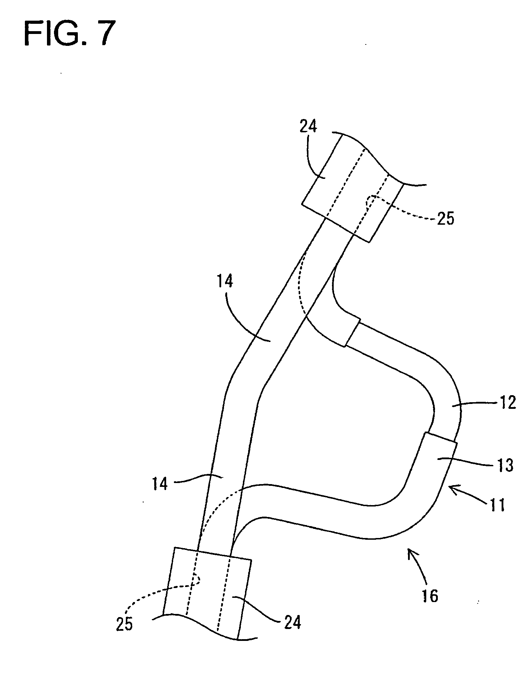

Hereinafter, one preferred embodiment of the present invention is described with reference to FIGS. 1 to 7. A motor of this embodiment preferably is a three-phase alternating current brushless motor with a plurality of (e.g. six) pairs of poles to be installed in a hybrid electric vehicle, is to be disposed in a narrow space between an engine (not shown) and a transmission (not shown), and is provided with a rotor (not shown) preferably substantially coaxially coupled to a horizontal crankshaft (not shown) of the engine, a ring-shaped stator (not shown) substantially concentrically encircling the rotor, and a ring-shaped central power distributing member D substantially concentrically encircling the stator. The stator includes a plurality of magnetic poles (not shown) preferably formed by winding a coil around a core (not shown), and the magnetic poles are arranged at given (predetermined or predeterminable) intervals substantially along a circumference concentric with the rotor. The opposite ends of the coils are drawn substantially radially outward (toward the central power distributing member) from the respective magnetic poles.

The central power distributing member D is provided for supplying power to the coils of the stator, and includes one or more (e.g. three) busbars 10, one or more (e.g. eighteen) clips 24, 26 and one or more (e.g. three) terminals 18.

Each busbar 10 is formed by bending a wire material 11 in which a single-core wire 12 (preferably having a substantially circular cross section) and made of a metal or conductive material is covered by an insulation coating 13, and preferably has a substantially right polygon shape with a specified number of (e.g. eighteen) vertices as a whole. More specifically, each busbar 10 includes the specified number of (e.g. eighteen) substantially straight portions 14, a specified tab number of (e.g. six) tabs 15 and one or more (e.g. two) connecting end portions 17.

Out of specified number of (e.g. eighteen) straight portions 14, a part (e.g. fifteen) are divided into first to fifth straight-portion rows 15A to 15E, wherein the remaining (e.g. three) straight portions 14 are connected at a predetermined angle (preferably substantially at 160°) to each other in each row. The first to fifth straight-portion rows 15A to 15E are connected one after another in this order preferably via the tabs 16, and the adjacent straight-portion rows 15A to 15E are at a predetermined angle (preferably substantially at 160°) to each other. The tabs 16 are formed to be bent substantially in U-shape projecting substantially radially inward at the ends of the respective straight-portion rows 15A to 15E, i.e. at boundaries between the adjacent straight-portion rows 15A to 15E. Each tab has the insulation coating 13 at least partly removed to at least partly expose the single-core wire 12, an end of the coil is electrically connected with the exposed section of the single-core wire by fusing or the like.

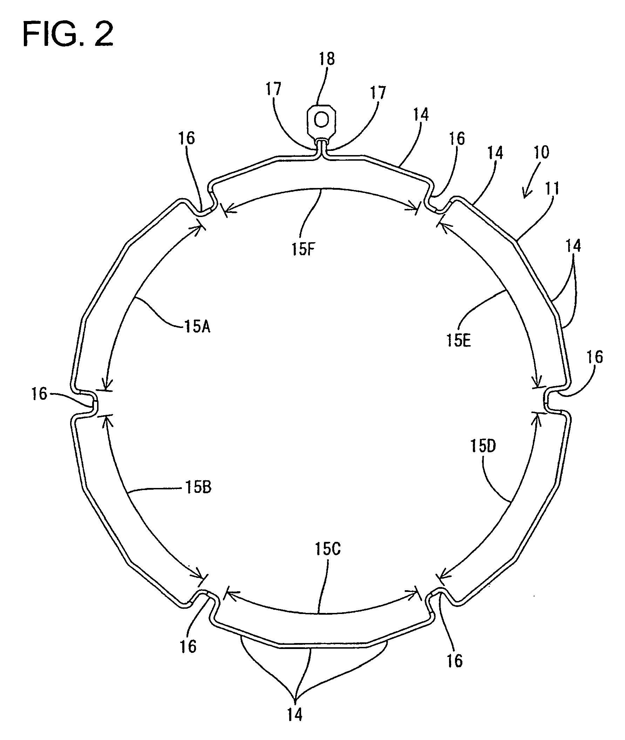

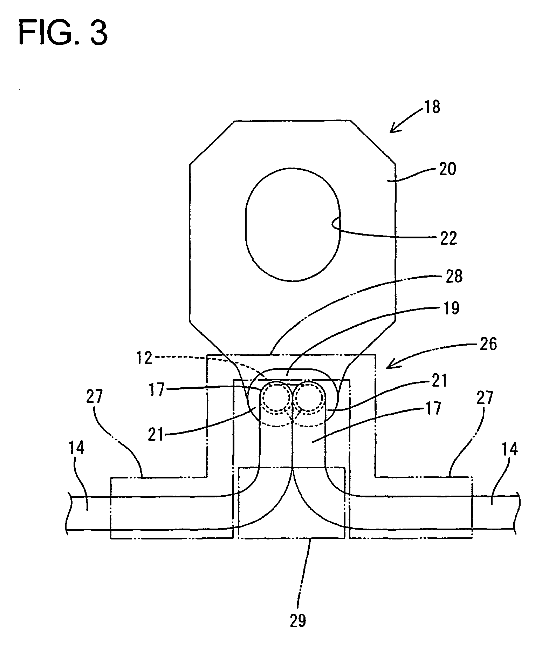

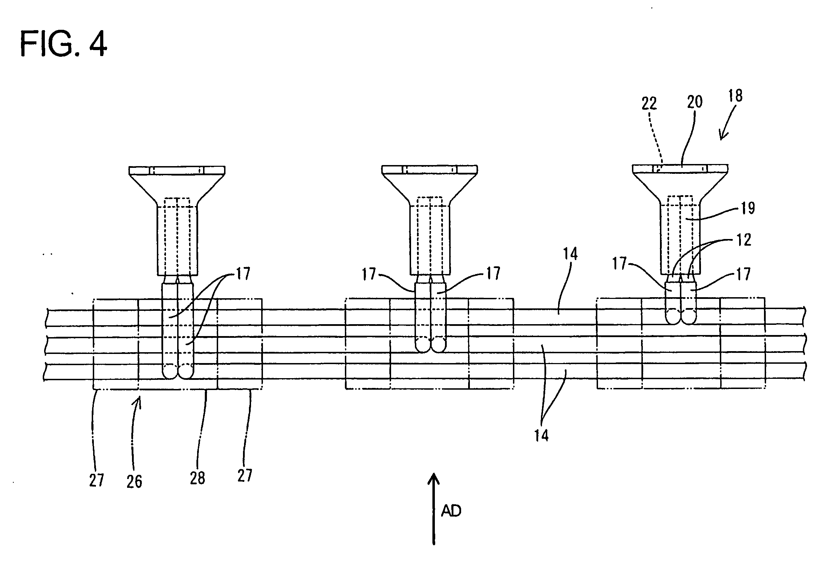

The remaining (e.g. three) straight portions 14 constitute or form part of a further (e.g. sixth) straight-portion row 15F by being connected one after another at a predetermined angle (preferably substantially at 160°) to each other, and the opposite ends of the sixth straight-portion row 15F are connected with the adjacent (first and fifth) straight-portion rows 15A, 15E via the tabs 16 preferably having the substantially same shape as above. The two connecting end portions 17 extend substantially in parallel and/or in close contact with each other from an intermediate part (preferably from a substantially middle part) of the intermediate or middle straight portion 14 of the (sixth) straight-portion row 15F. The two connecting end portions 17 extend substantially in radially outward direction (upward in FIGS. 2 and 3) and are then bent to extend substantially in an axial direction AD, thereby preferably being substantially "L"-shaped. As shown in FIG. 4, the extending lengths of the connecting end portions 17 differ depending on the busbars 10, considering that the plurality of (e.g. three) busbars 10 are placed substantially one after another in the axial direction AD.

The extending ends of a pair of connecting end portions 17 have the insulation coating 13 at least partly removed to at least partly expose the single-core wire 12, and the terminal 18 can be electrically connected with the exposed sections of the single-core wire 12. The terminal 18 preferably is made of a conductive or metal sheet and/or a (preferably substantially L-shaped) integral or unitary assembly of a connecting plate portion 19 (preferably substantially parallel to the axial direction AD) and a mounting plate portion 20 (preferably extending at an angle different from 0° or 180°, preferably substantially at a right angle (substantially in radial direction) from the connecting plate portion 19). One or more, preferably a pair of crimping pieces 21 extend from the (preferably substantially opposite) lateral edge(s) of the connecting plate portion 19 in such a manner as to be foldable, and the exposed sections of the single-core wire 12 at the ends of the connecting end portions 17 are or can be secured to the terminal 18 preferably by being squeezed between the connecting plate portion 19 and the respective one or more crimping pieces 21. The mounting plate portion 20 is formed with a mount hole 22 penetrating the mounting plate portion 20 preferably substantially in the axial direction AD. A wire (not shown) connected with an inverter (not shown) is to be connected with this mounting plate portion 20, and power is to be supplied to the busbar 10 via this mounting plate portion 20.

Since the lengths of the extending portions of the connecting end portions 17 of the respective busbars 10 substantially in the axial direction AD differ from each other as described above, the positions of the mounting plate portions 20 of all the busbars 10 are substantially aligned with respect to the axial direction AD as shown in FIG. 4 with the three busbars 10 tied while being placed one after another along the axial direction AD in a specified (predetermined or predeterminable) positional relationship as described later.

The plurality of (e.g. three) busbars 10 are substantially coaxially placed one after another at given (predetermined or predeterminable) intervals substantially along the axial direction AD. One or more (e.g three) kinds of clips 24, 26, 29 preferably made of a synthetic resin are used as means for tying the plurality of (e.g. three) busbars 10. Each (preferably substantially plate-like) clip 24 preferably is substantially in the form of a rectangular flat plate as a whole, and a plurality of (e.g. three) straight holding grooves 25 are formed substantially in parallel with each other and at specified (predetermined or predeterminable) intervals in or on one plate surface thereof. The holding grooves 25 preferably have an arcuate or round cross section, and the inner diameter thereof preferably is substantially equal to the outer diameter of the busbars 10 (preferably of the wire material 11). On the other hand, each terminal clip 26 is an integral or unitary assembly of a pair of (preferably substantially flat) plate portions 27 spaced apart from each other in such a manner that the plate surfaces thereof preferably are at the substantially same height and/or a substantially U-shaped bent portion 28 coupling the end edges of both plate portions 27, each of which is formed with one or more, e.g. three holding grooves 25 having the substantially same shape as those of the (preferably substantially plate-like) clips 24. Each inner clip 29 preferably is in the form of a block (thick plate) and has unillustrated holding grooves into which bent base ends of the connecting end portions 17 are at least partly fitted.

The plurality of (e.g. three) busbars 10 are substantially coaxially arranged while being spaced apart at the given (predetermined or predeterminable) intervals along the axial direction AD, and circumferentially positioned preferably such that the respective straight portions 14 are arranged substantially in parallel with each other. At this time, the plurality of (e.g. three) terminals 18 are circumferentially displaced from each other a predetermined angle (preferably substantially by 20°). In this state, the plurality of (e.g. eighteen) tabs 16 are arranged at even intervals (preferably substantially of 20°), and the terminal 18 of each busbar 10 is so positioned as to substantially correspond to intermediate parts (preferably to substantially middle parts) of the two substantially straight portions 14 of the other two busbars 10 arranged substantially in parallel in each of plurality of (e.g. three) areas where the terminals 18 are present, out of plurality of (e.g. eighteen) areas partitioned by the plurality of (e.g. eighteen) tabs 16. Further, in each of the remaining (e.g. fifteen) areas where no terminal 18 is present, a number of (e.g. three) straight portions 14 are arranged substantially in parallel along the axial direction AD.

The aforementioned clips 24, 26, 29 are assembled between the tabs 16 adjacent to each other substantially along circumferential direction. Specifically, each (preferably substantially plate-like) clip 24 is so assembled as to at least partly fit the holding grooves 25 to the respective (three) straight portions 14 arranged substantially in parallel from a radially outer side, whereby the respective (three) straight portions 14 are held substantially in a parallel positional relationship via the (preferably substantially plate-like) clip 24 at respective (fifteen) positions circumferentially spaced apart from each other. Further, each terminal clip 26 is assembled to at least partly fit the bent portion 28 to the connecting end portions 17 and/or at least partly fit the holding grooves 25 to the respective (three) straight portions 14 arranged substantially in parallel from a radially outward side, whereby the respective (three) straight portions 14 including the one 14 connected with the terminal 18 are held in a substantially parallel positional relationship via the terminal clip 26 at one or more (e.g. three) circumferentially adjacent positions. Furthermore, each inner clip 29 is assembled to fit the holding grooves (not shown) thereof to the base ends of the connecting end portions 17 and to close an inner opening of the bent portion 28 of the terminal clip 28. A (preferably resin-made or -containing) filler (not shown) is at least partly filled into a space enclosed by the bent portion 28 and the inner clip 29 to at least partly fill up a clearance between the connecting end portions 17 located in this space. In this way, the connecting end portions 17 can be held insulated from each other even if the insulation coating 13 is torn to expose the single-core wire 12 when the connecting end portions 17 are bent.

As described above, according to this embodiment, each busbar 14 is formed with a plurality of substantially straight portions 14 circumferentially arranged at specified (predetermined or predeterminable) intervals, and a plurality of busbars 10 are preferably tied at a plurality of circumferentially spaced apart positions preferably by connecting the straight portions 14 arranged substantially in parallel. Thus, the busbars 10 can be positioned with high precision without being circumferentially displaced from each other, thereby avoiding the deviation of intervals between the tabs 16 and those between the terminals 18 from correct ones.

If a long and narrow metal material is bent into an arc, springback is unavoidable because a bending curvature generally lies close to or substantially within the range of resiliency limit, wherefore it is difficult to finish the arc of a highly precise curvature. In this respect, since the busbar 10 is formed by successively connecting a plurality of substantially straight portions 14 at (predetermined or predeterminable) angles to each other, i.e. the busbar 10 is comprised only of a plurality of substantially straight portions 14, the busbar 10 is plastically deformed with a large curvature exceeding the resiliency limit of the single-core wire 12. Therefore, the busbars 10 can be formed by bending with high precision substantially without being influenced by the springback.

The tabs 16 are formed preferably by bending portions of the busbars to project in such a folded manner (substantially V- or U-shaped) and, hence, are integral or unitary to the busbar 10. Thus, the number of parts can be reduced as compared to a case where the tabs 16 formed as parts separate from the busbars 10 are secured to the busbars 10.

Accordingly, to enable a plurality of busbars to be circumferentially positioned, each busbar 10 is formed with a plurality of substantially straight portions 14 circumferentially arranged at specified (predetermined or predeterminable) intervals. Since a plurality of busbars 10 are tied at one or more, preferably a plurality of circumferential spaced apart positions by connecting substantially straight positions 14 arranged substantially in parallel, the busbars 10 can be positioned with high precision without being circumferentially displaced from each other. This can avoid the deviation of intervals between the tabs 16 and those between terminals 18 from correct ones.

### <Other Embodiments>

The present invention is not limited to the above described and illustrated embodiment. For example, the following embodiments are also embraced by the technical scope of the present invention as defined by the claims.
(1) Although the busbars are comprised only of the substantially straight portions in the foregoing embodiment, the busbars may be formed such that a plurality of substantially straight portions and a plurality of arcuate portions are alternately connected with each other according to the present invention.
(2) Although the tabs are formed to be integral or unitary to the busbars in the foregoing embodiment, they may be parts separate from the busbars according to the present invention.
(3) Although the busbars are formed by bending the wire materials in the foregoing embodiment, they may be formed by bending band- or strip-shaped materials according to the present invention.
(4) Although the tabs are substantially U-shaped in the foregoing embodiment, they may be substantially triangular or V-shaped, I-shaped, trapezoidal or arcuate according to the present invention.
(5) Although the number of the busbars is three in the foregoing embodiment, the present invention is also applicable in cases where the number of the busbars is two, four or more.
(6) Although the number of the tabs in one busbar is six in the foregoing embodiment, the present invention is also applicable in cases where it is other than six.
(7) Although the insulation coating is removed to at least partly expose the single-core wire upon connecting the coil with the busbar in the foregoing embodiment, a magnet wire (or wire having magnetic properties) may be used as a wire material for the busbar and a single-core wire may be connected with the coil preferably while an insulation coating is, for example, fused upon the connection.
(8) Since the three-phase alternating current motor with six pairs of poles is used in the foregoing embodiment, the circumferentially adjacent straight portions are at about 160° to each other. However, according to the present invention, the busbar can have an optimal polygonal shape depending on the number of poles of the motor and whether an alternating current or a direct current is applied.
(9) Although the clips are mounted preferably on all the straight portions in the foregoing embodiment, the number of the clips may be a minimum necessary number to hold the busbars according to the present invention or more.

### LIST OF REFERENCE NUMERALS

- D ...: central power distributing member
- 10 ...: busbar
- 14 ...: straight portion
- 16 ...: tab
- 18 ...: terminal

## Claims

1. A central power distributing member (D) for a brushless motor for supplying power to coils of a stator, the central power distributing member (D) comprising a plurality of tied substantially ring-shaped busbars (10) each provided with at least one power supply terminal (18) and tabs (16) to be connected with the coils,
wherein:
each busbar (10) is formed by bending a wire material (11) in which at least one single-core wire (12) is covered by an insulation coating (13) and is formed with a plurality of straight portions (14) circumferentially arranged at intervals,
each busbar (10) comprises a plurality of straight-portion rows (15A to 15F) and is formed to substantially have a ring shape by connecting the plurality of straight portions (14) at angles to each other,
wherein each of the straight-portion rows (15A to 15F) comprises three straight portions (14), and
the plurality of busbars (10) are tied by one or more clips (24; 26; 29) at a plurality of circumferentially spaced apart positions by connecting the straight portions (14) arranged substantially in parallel.

2. A central power distributing member (D) according to claim 1, wherein the one or more clips (24; 26; 29) are made of a synthetic resin.

3. A central power distributing member (D) according to one or more of the preceding claims, wherein the tabs (16) are formed by bending portions of the busbars (10) to project in a folded state.

4. A central power distributing member (D) according to one or more of the preceding claims, wherein a pair of connecting end portions (17) have the insulation coating (13) at least partly removed to at least partly expose the at least one single-core wire (12), and the terminal (18) can be electrically connected with the exposed sections of the single-core wire (12).

5. A central power distributing member (D) according to claim 4, wherein a filler is at least partly filled into a space adjacent to the connecting end portions (17) such that the connecting end portions (17) can be held insulated from each other.

6. A central power distributing member (D) according to one or more of the preceding claims, wherein the busbars (10) are substantially coaxially arranged while being spaced apart at the given intervals along an axial direction (AD).

7. A brushless motor comprising a central power distributing member (D) according to one or more of the preceding claims for supplying power to coils of a stator.

8. A method of assembling a central power distributing member (D) for a brushless motor for supplying power to coils of a stator, the method comprising the following steps:
providing a plurality of substantially ring-shaped busbars (10) each provided with at least one power supply terminal (18) and tabs (16) to be connected with the coils,
forming each busbar (10) by bending a wire material (11) in which at least one single-core wire (12) is covered by an insulation coating (13) and providing a plurality of straight portions (14) circumferentially arranged at intervals,
forming each busbar (10) to comprise a plurality of straight-portion rows (15A to 15F) and to substantially have a ring shape by connecting the plurality of straight portions (14) at angles to each other, wherein each straight-portion
row (15A to 15F) comprises three straight portions (14), respectively, and
tying the plurality of busbars (10) by one or more clips (24; 26; 29) at a plurality of circumferentially spaced apart positions by connecting the straight portions (14) arranged substantially in parallel.

## Patentansprüche

1. Ein zentrales Energieverteilungselement (D) für einen bürstenlosen Motor zur Zufuhr von Energie an Wicklungen eines Stators, wobei das zentrale Energieverteilungselement (D) eine Vielzahl an verbundenen, im Wesentlichen ringförmigen Sammelschienen (10) umfasst, von denen jede mit mindestens einem Energieversorgungsanschluss (18) und mit Schlaufen (*tabs*) (16) versehen ist, die mit den Wicklungen zu verbinden sind,
wobei
jede Sammelschiene (10) durch Verbiegen eines Drahtmaterials (11) geformt ist, bei dem mindestens ein einadriger Draht (12) durch eine isolierende Beschichtung (13) bedeckt ist und durch eine Vielzahl von geraden Abschnitten oder Geradenstücken (*straight portions*) (14) die im Umfangsbereich mit Abstand zueinander angeordnet sind,
jede Sammelschiene (10) eine Vielzahl von Reihenanordnungen (*rows*) (15A bis 15F) aus Geradenstücken umfasst, und derart geformt ist, dass sie durch die gegenseitig angewinkelte Verbindung der Vielzahl an Geradenstücken (14) im Wesentlichen eine Ringform aufweist,
wobei jede der Reihenanordnungen (15A bis 15F) aus Geradenstücken drei gerade Abschnitte (14) umfasst, und
die Vielzahl an Sammelschienen (10) durch eine oder mehrere Klammern (*clips*) (24; 26; 29) an einer Vielzahl von am Umfang voneinander beabstandeten Stellen durch Verbindung der im Wesentlichen parallel angeordneten geraden Abschnitte (14) zusammengehalten werden.

2. Ein zentrales Energieverteilungselement (D) nach Anspruch 1, wobei die eine oder die mehreren Klammern (24; 26; 29) aus einem Kunstharz bestehen.

3. Ein zentrales Energieverteilungselement (D) nach einem der vorhergehenden Ansprüche, wobei die Schlaufen (16) durch Verbiegen von Teilen der Sammelschienen (10) geformt sind, um im gebogenen Zustand vorzuspringen.

4. Ein zentrales Energieverteilungselement (D) nach einem der vorhergehenden Ansprüche, wobei bei einem Paar von Verbindungsendabschnitten (17) die isolierende Beschichtung (13) wenigstens teilweise entfernt ist, um den mindestens einen einadrigen Draht (12) wenigstens teilweise freizulegen, und wobei der Anschluss (18) an die freigelegten Abschnitte des einadrigen Drahts (12) elektrisch angeschlossen werden kann.

5. Ein zentrales Energieverteilungselement (D) nach Anspruch 4, wobei ein Füllstoff zumindest teilweise in einen Raum eingefüllt ist, der an den Verbindungsendabschnitten (17) angrenzt, so dass die Verbindungsendabschnitte (17) voneinander isoliert gehalten werden können.

6. Ein zentrales Energieverteilungselement (D) nach einem der vorhergehenden Ansprüche, wobei die Sammelschienen (10) im Wesentlichen koaxial angeordnet sind, während sie in den gegebenen Intervallen in axialer Richtung (AD) beabstandet sind.

7. Ein bürstenloser Motor, der ein zentrales Energieverteilungselement (D) umfasst nach einem der vorhergegangenen Ansprüchen, um Energie an Wicklungen eines Stators zuzuführen.

8. Ein Verfahren zur Herstellung eines zentralen Energieverteilungselements (D) für einen bürstenlosen Motor, um Energie an Wicklungen eines Stators zuzuführen, wobei das Verfahren folgende Schritte umfasst:
das Bereitstellen einer Vielzahl von im Wesentlichen ringförmigen Sammelschienen (10), von denen jede mit mindestens einem Energieversorgungsanschluss (18) und mit Schlaufen (16) ausgestattet ist, die mit den Wicklungen zu verbinden sind,
das Formen jeder Sammelschiene (10) durch Verbiegen eines Drahtmaterials (11), bei dem mindestens ein einadriger Draht (12) durch eine isolierende Beschichtung (13) bedeckt ist, und durch die Bereitstellung einer Vielzahl von geraden Abschnitten (14), die im Umfangsbereich mit Abstand zueinander angeordnet sind,
das Formen jeder Sammelschiene (10), um eine Vielzahl von Reihenanordnungen (15A bis 15F) aus Geradenstücken zu umfassen und um im Wesentlichen eine Ringform durch die gegenseitig angewinkelte Verbindung der Vielzahl an Geradenstücken (14) zu erhalten,
wobei jede Reihenanordnung (15A bis 15F) aus Geradenstücken jeweils drei gerade Abschnitte (14) umfasst, und
das Zusammenhalten der Vielzahl an Sammelschienen (10) durch eine oder mehrere Klammern (24; 26; 29) an einer Vielzahl von am Umfang voneinander beabstandeten Stellen durch Verbindung der im Wesentlichen parallel angeordneten geraden Abschnitte (14).

## Revendications

1. Elément de distribution de puissance central (D) pour un moteur sans balai pour alimenter les bobines d'un stator, l'élément de distribution de puissance central (D) comprenant une pluralité de barres omnibus (10) liées sensiblement de forme annulaire pourvues chacune d'au moins une borne d'alimentation (18) et de pattes (16) destinées à être connectées aux bobines,
dans lequel:
chaque barre omnibus (10) est formée en pliant un matériau filaire (11) dans lequel au moins un câble à un seul conducteur (12) est recouvert d'un revêtement isolant (13) et comporte une pluralité de parties droites (14) agencées circonférentiellement à intervalles,
chaque barre omnibus (10) comprend une pluralité de rangées de parties droites (15A à 15F) et est formée de manière à avoir une forme sensiblement annulaire en reliant la pluralité de parties droites (14) les unes aux autres selon des angles,
dans lequel chacune des rangées de parties droites (15A à 15F) comprend trois parties droites (14), et
la pluralité de barres omnibus (10) sont liées par un ou plusieurs colliers (24; 26; 29) à une pluralité de positions espacées circonférentiellement en reliant les parties droites (14) agencées sensiblement en parallèle.

2. Elément de distribution de puissance central (D) selon la revendication 1, dans lequel le ou la pluralité de colliers (24 ; 26 ; 29) sont réalisés en une résine synthétique.

3. Elément de distribution de puissance central (D) selon une ou plusieurs des revendications précédentes, dans lequel les pattes (16) sont formées en pliant des parties de barres omnibus (10) de manière à ce qu'elles fassent saillie dans un état plié.

4. Elément de distribution de puissance central (D) selon une ou plusieurs des revendications précédentes, dans lequel le revêtement isolant (13) est au moins partiellement retiré au niveau de deux parties d'extrémité de connexion (17) pour exposer au moins partiellement ledit au moins un câble à un seul conducteur (12), et la borne (18) peut être connectée électriquement aux sections exposées du câble à un seul conducteur (12).

5. Elément de distribution de puissance central (D) selon la revendication 4, dans lequel un agent de remplissage est introduit au moins partiellement dans un espace adjacent aux parties d'extrémité de connexion (17) de sorte que les parties d'extrémité de connexion (17) puissent être maintenues isolées les unes des autres.

6. Elément de distribution de puissance central (D) selon une ou plusieurs des revendications précédentes, dans lequel les barres omnibus (10) sont agencées de manière sensiblement coaxiale tout en étant espacées aux intervalles donnés le long d'une direction axiale (AD).

7. Moteur sans balai comprenant un élément de distribution de puissance central (D) selon une ou plusieurs des revendications précédentes pour alimenter les bobines d'un stator.

8. Procédé d'assemblage d'un élément de distribution de puissance central (D) pour un moteur sans balai pour alimenter les bobines d'un stator, le procédé comprenant les étapes suivantes consistant à :
fournir une pluralité de barres omnibus (10) sensiblement de forme annulaire pourvues chacune d'au moins une borne d'alimentation (18) et de pattes (16) destinées à être reliées aux bobines,
former chaque barre omnibus (10) en pliant un matériau filaire (11) dans lequel au moins un câble à un seul conducteur (12) est recouvert d'un revêtement isolant (13) et en prévoyant une pluralité de parties droites (14) agencées circonférentiellement à intervalles,
former chaque barre omnibus (10) de manière à ce qu'elle comprenne une pluralité de rangées de parties droites (15A à 15F) et qu'elle ait une forme sensiblement annulaire en reliant la pluralité de parties droites (14) les unes aux autres selon des angles,
dans lequel chaque rangée de parties droites (15A à 15F) comprend trois parties droites (14), respectivement, et
lier la pluralité de barres omnibus (10) par un ou plusieurs colliers (24 ; 26 ; 29) à une pluralité de positions espacées circonférentiellement en reliant les parties droites (14) agencées sensiblement en parallèle.
